# EUROPEAN PATENT APPLICATION

(11) **EP 0 816 728 A1**
(43) Date of publication of application: **07.01.1998**
(21) Application number: 97109924.7
(22) Date of filing: 18.06.1997
(51) Int. Cl.: F16K 11/20

(54) **Mixer with separate controls, particularly for sanitary fittings and the like**

(30) Priority: 01.07.1996 IT MI961347
(71) Applicant: Stella, Giulio, 28100 Novara (IT)
(72) Inventor: Stella, Giulio, 28100 Novara (IT)
(74) Representative: Modiano, Guido, Dr.-Ing.

(57) **Abstract**

A mixer with separate controls, particularly for sanitary fittings and the like, comprising a mixing assembly (1) which is connected to the deliveries of hot (5) and cold (4) water and a flow adjustment cock (11) which is separate from the mixing assembly (1) and is connected thereto through a duct (10) for the passage of the mixed liquid, the flow adjustment cock (11) being connected to a delivery spout (16).

## Description

The present invention relates to a mixer with separate controls, particularly for sanitary fittings and the like.

Mixers normally used in sanitary fittings and the like are conventionally constituted by a cock for adjusting the flow-rate of the cold water and by a cock for adjusting the hot water, downstream of which the delivery ducts merge into a mixing outlet.

With this embodiment, which allows to obtain an optimum aesthetic arrangement of the various assemblies on the sanitary fitting, there is however the drawback that the mixing settings are lost when the flow must be interrupted, since each cock adjusts the flow of water and the flow is interrupted by closing both cocks, consequently clearly losing the setting.

So-called single-lever or single-control mixers have long been introduced in order to solve this problem: in these mixers, flow is adjusted by making the lever oscillate along a certain direction and the mixing of cold and hot water is adjusted by making said lever oscillate along a direction which is perpendicular to the preceding one.

This embodiment, while having proved itself effective in many aspects, is generally not accepted from an aesthetic point of view, since all the elements are provided in a single assembly; most of all, however, since it is necessary to use the only lever for both adjustments, it is not always possible to correctly perform the movements.

A principal aim of the present invention is to solve the problems described above with reference to the solutions of the prior art by providing a mixer with separate controls, particularly for sanitary fittings and the like, which allows to independently adjust the mixing and the flow of water by using means which are fully separate from each other.

Within the scope of this aim, a particular object of the invention is to provide a mixer which, being obtained by means of a plurality of separate elements, allows to better deal with the aesthetic issues related to the installation of faucets in sanitary fittings.

Another object of the present invention is to provide a mixer which, thanks to its particular constructive characteristics, is capable of giving the greatest assurances of reliability and safety in use.

Another object of the present invention is to provide a mixer with separate controls, particularly for sanitary fittings and the like, which can be easily adapted to the various styles and periods and is also competitive from a merely economical point of view.

This aim, these objects, and others which will become apparent hereinafter are achieved by a mixer with separate controls, particularly for sanitary fittings and the like, according to the invention, characterized in that it comprises a mixing assembly which is connected to the deliveries of hot and cold water and a flow adjustment cock which is separate from said mixing assembly and is connected thereto by means of a duct for the passage of the mixed liquid, said flow adjustment cock being connected to a delivery spout.

Further characteristics and advantages of the present invention will become apparent from the following detailed description of a preferred but not exclusive embodiment of a mixer with separate controls, particularly for sanitary fittings and the like, illustrated only by way of non-limitative example in the accompanying drawings, wherein:
figure 1 is a schematic view of the mixer according to the invention;
figure 2 is a view of the mixer applied to a washbasin.

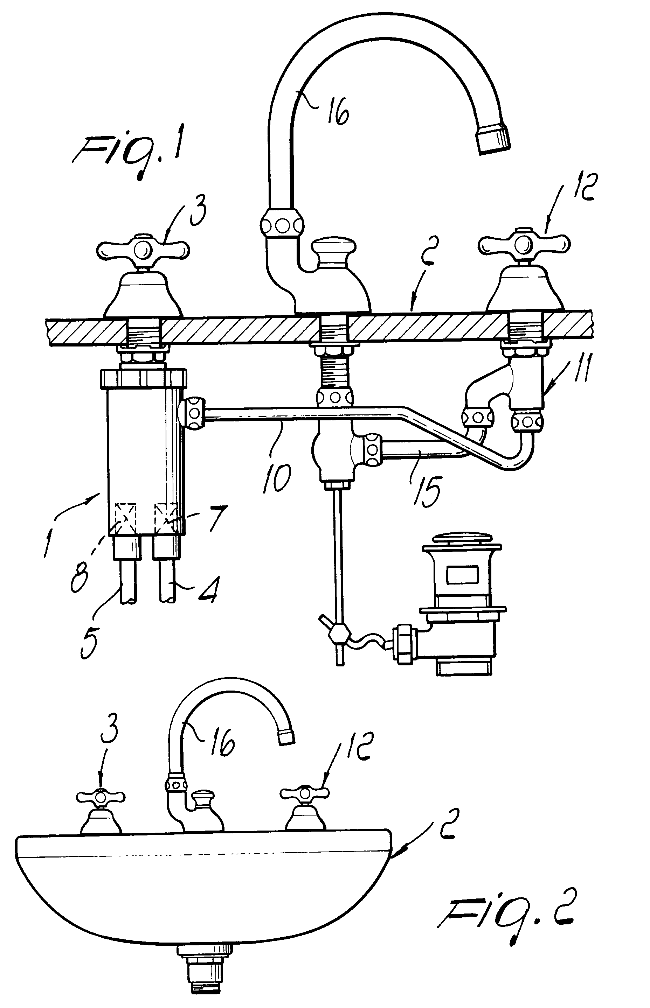

With reference to the above figures, the mixer with separate controls, particularly for sanitary fittings and the like, according to the invention, comprises a mixing assembly 1 which is applied to a sanitary fitting 2 and is provided with a control element 3 constituted for example by a conventional knob which can be accessed on the sanitary fitting.

The cold water delivery 4 and the hot water delivery 5 merge in the mixing assembly 1; said deliveries are mixed in the amount and percentage which is set by acting on the control element.

Check valves 7 and 8 are provided in the mixing assembly 1 and are arranged on the hot and cold water deliveries in order to prevent the occurrence of undue reverse flows or circulations between hot and cold water.

A duct for the flow of the mixed liquid, designated by the reference numeral 10, leads out of the mixing assembly 1 and is connected to a flow adjustment cock 11, which is separate with respect to the mixing assembly 1 and is also connected to the sanitary fitting 2, where it has a control element 12 which in practice has the purpose of controlling the flow of mixed water to the delivery spout 16.

A delivery duct 15 leads out of the flow adjustment cock and is connected to the conventional delivery spout 16 provided on the washbasin.

With the above-described arrangement it is thus possible to separately and independently provide an assembly for adjusting the temperature of the water mix and a cock for adjusting the flow and to be able to close or in any case change the water flow without however modifying the mixing percentage.

Another important aspect resides also in the fact that, since a plurality of separate elements are provided, it is possible to achieve better aesthetic impact at the time of installation in the sanitary fitting.

From the above description it is thus evident that the invention achieves the intended aim and objects, and in particular the importance of the new solution is stressed, which in practice separates the function of adjusting the temperature of a mixture of hot and cold water and the function of adjusting the flow of mixed water, thus allowing to maintain the set values without having to resort to complicated and repeated actuations to seek the intended temperature, consequently saving water.

The invention thus conceived is susceptible of numerous modifications and variations, all of which are within the scope of the inventive concept.

All the details may also be replaced with other technically equivalent elements.

In practice, the materials employed, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A mixer with separate controls, particularly for sanitary fittings and the like, characterized in that it comprises a mixing assembly (1) which is connected to the deliveries of hot (5) and cold (4) water and a mixed water flow adjustment cock (11) which is separate from said mixing assembly (1) and is connected thereto by means of a duct (10) for the passage of the mixed liquid, said flow adjustment cock (11) being connected to a delivery spout (16).

2. A mixer according to claim 1, characterized in that it comprises check valves (7,8) on said deliveries of hot (5) and cold (4) water to prevent water recirculation.

3. A mixer according to the preceding claims, characterized in that it comprises elements (3,12) for actuating said mixing assembly (1) and said flow adjustment cock (11) respectively, said elements (3,12) being accessible on the sanitary fitting (2).

4. A mixer according to one or more of the preceding claims, characterized in that said delivery spout (16) is arranged between said mixing assembly (1) and said flow adjustment cock (11).
